# EUROPEAN PATENT APPLICATION

(11) **EP 3 073 714 A1**
(43) Date of publication of application: **28.09.2016**
(21) Application number: 13897676.6
(22) Date of filing: 18.11.2013
(51) Int. Cl.: H04M 1/21

(54) **TERMINAL AND TERMINAL MANAGEMENT METHOD**

(71) Applicant: Yulong Computer Telecommunication Scientific (Shenzhen) Co. Ltd., Shenzhen, Guangdong 518057 (CN)
(72) Inventor: TIAN, Cuicui, Shenzhen Guangdong 518057 (CN)
(74) Representative: Johnson, Richard Alan
(86) International application number: PCT/CN2013/087303
(87) International publication number: WO 2015/070449

(57) **Abstract**

Provided is a terminal, comprising: an acquisition unit which acquires the moving speed of the terminal; a judgement unit which is used for judging whether a user of the terminal gazes upon a screen of the terminal when the moving speed is greater than or equal to a first moving speed and is less than or equal to a second moving speed; and a processing unit which performs a corresponding security processing operation when the judgement result of the judgement unit is yes. Correspondingly, also provided is a terminal management method. By means of the technical solution of the present invention, corresponding reminding and limitation can be performed when a user plays with a mobile phone while walking so as to guarantee the personal security of the user.

## Description

### FIELD OF THE INVENTION

The present invention relates to the technical field of terminal, and particularly to a terminal and a terminal management method.

### BACKGROUND

With the development of mobile phone, more and more people like to play with a mobile phone while walking, which causes great danger to the personal security of a user; especially for kids on the way to school, it will be danger if they play with a mobile phone while walking.

However, with regard to the behavior that the user plays with a mobile phone while walking, the terminal in the related art has no reminder and restriction, which affects the personal security of the user seriously.

Therefore, it is desired to provide a new technical solution which can have a corresponding reminder or a restriction if the user plays with a mobile phone while walking, therefore, guarantee the personal security of the user.

### SUMMARY OF THE INVENTION

Based on the above-mentioned problem, the present invention provides a new technical solution, which can have a corresponding reminder or restriction if the user plays with a mobile phone while walking, therefore, guarantee the personal security of the user.

In view of this, the present invention provides a terminal, which comprises: an acquisition unit, configured to acquire the moving speed of the terminal; a judgement unit, configured to judge whether a user of the terminal gazes upon a screen of the terminal when the moving speed is greater than or equal to a first moving speed and is less than or equal to a second moving speed; a processing unit, configured to perform a corresponding security processing operation if the judgement result of the judgement unit is yes.

In the technical solution, it is judged whether the user of the terminal is in a walking state according to the moving speed of the terminal. The user will be in the walking state if the moving speed of the terminal is in a walking speed range, here judge whether the user is playing with a mobile phone and perform the corresponding security processing operation if it is judged that the user is playing with a mobile phone, thus to remind or restrict the dangerous behavior of playing with a mobile phone while walking and guarantee the personal security of the user.

In the above-mentioned technical solution, preferably, the judgement unit further comprises: an image collecting subunit, configured to collect a current image and acquire the image information of the current image; an image parsing subunit, configured to parse the image information and judge whether eye characteristics information is included in the image information according to the parse result, and judge whether the user of the terminal gazes upon the screen of the terminal according to the eye characteristics information if the eye characteristics information is included in the image information.

In the technical solution, eye-tracing technology can be used to achieve the judgment of whether the user gazes upon the screen of the terminal, that is, acquire the current image through a camera; the user may not gaze upon the screen of the terminal currently if there is no eye characteristic image included in the acquired current image; otherwise, determine the gaze direction and position etc. of the user according to the eye characteristic image if the eye characteristic image is included in the acquired current image, thereby judging whether the user gazes upon the screen of the terminal.

In the above-mentioned technical solution, preferably, the processing unit is further configured to: start to count the gaze duration upon the screen of the user of the terminal if the judgement result of the judgement unit is yes, and perform the corresponding security processing operation if the duration exceeds a preset duration.

In the technical solution, it is determined that the user plays with a mobile phone while walking after confirming that the user has gazed upon the screen of the mobile phone for a while during walking, and then the security processing operation will be performed, thus to ensure the accuracy of the judgement result and avoid inconvenience caused by an erroneous judgement.

In the above-mentioned technical solution, preferably, the security processing operation comprises: initiating a security reminder, closing the data service of the terminal, and/or sending a preset massage to other preset terminals.

In the technical solution, the security processing operation can be initiating a security reminder, such as sending a reminder message to the user to remind him should not play with a mobile phone while walking for his personal security. The security processing operation can also be closing the data service of the terminal automatically; in this way, the user will be forced to stop gazing upon a mobile phone. If the user who gazes upon a mobile phone while walking is a child, the security processing operation can also be sending a preset massage to other preset terminals, that is, sending a message to his or her parents etc. to remind the dangerous behavior. A person skilled in the art will understand that the security processing operation includes but is not limited to the above-mentioned operations; it can also be other operations, such as locking the screen automatically and powering off etc.

In the above-mentioned technical solution, preferably, the terminal further comprises: a speed detecting unit, configured to detect and record the real-time speed of the terminal; a computing unit, configured to calculate the moving speed according to the recorded real-time speed.

In the technical solution, in order to ensure the accuracy of the judgement of the speed of the terminal, the speed can be collected in real time, and then calculate the average speed of a period of time (for example, two minutes) of the terminal and use the average speed as the moving speed of the terminal, thereby avoiding an erroneous judgement and an erroneous operation of the terminal.

In the above-mentioned technical solution, preferably, the terminal further comprises: a setting unit, configured to set the first moving speed, the second moving speed, and/or the security processing operation according to a received setting instruction.

In the technical solution, the user or the manufacture can set a judgement condition (i.e. the threshold of moving speed) of the walking state freely according to the requirements, and set the operation used to remind the user freely if it is determined that the user plays with a mobile phone while walking, thereby satisfying different requirements of different users and improving the user experience.

According to another aspect of the present invention, it is provided a terminal management method, it comprises: step 202, acquiring the moving speed of the terminal; step 204, judging whether a user of the terminal gazes upon a screen of the terminal when the moving speed is greater than or equal to a first moving speed and is less than or equal to a second moving speed; step 206, performing a corresponding security processing operation when the judgement result is yes.

In the technical solution, it is judged whether the user of the terminal is in a walking state according to the moving speed of the terminal. The user will be in the walking state if the moving speed of the terminal is in a walking speed range, here judge whether the user is playing with a mobile phone and perform the corresponding security processing operation if it is judged that the user is playing with a mobile phone, thus to remind or restrict the dangerous behavior of playing with a mobile phone while walking and guarantee the personal security of the user.

In the above-mentioned technical solution, preferably, the step 204 comprises: collecting a current image and acquiring the image information of the current image; analyzing the image information and judging whether eye characteristics information is included in the image information according to the parse result, and judging whether the user of the terminal gazes upon the screen of the terminal according to the eye characteristics information if the eye characteristics information is included in the image information.

In the technical solution, eye-tracing technology can be used to achieve the judgment of whether the user gazes upon the screen of the terminal, that is, acquire the current image through a camera; the user may not gaze upon the screen of the terminal currently if there is no eye characteristic image included in the acquired current image; otherwise, determine the gaze direction and position etc. of the user according to the eye characteristic image if the eye characteristic image is included in the acquired current image, thereby judging whether the user gazes upon the screen of the terminal.

In the above-mentioned technical solution, preferably, the step 206 further comprises: starting to count the gaze duration upon the screen of the user of the terminal if the judgement result of the judgement unit is yes, and performing the corresponding security processing operation if the duration exceeds a preset duration.

In the technical solution, it is determined that the user plays with a mobile phone while walking after confirming that the user has gazed upon the screen of the mobile phone for a while during walking, and then the security processing operation will be performed, thus to ensure the accuracy of the judgement result and avoid inconvenience caused by an erroneous judgement.

In the above-mentioned technical solution, preferably, the security processing operation comprises: initiating security reminder, closing the data service of the terminal, and/or sending a preset massage to other preset terminals.

In the technical solution, the security processing operation can be initiating a security reminder, such as sending a reminder message to the user to remind him should not play with a mobile phone while walking for his personal security. The security processing operation can also be closing the data service of the terminal automatically; in this way, the user will be forced to stop gazing upon a mobile phone. If the user who gazes upon a mobile phone while walking is a child, the security processing operation can also be sending a preset massage to other preset terminals, that is, sending a message to his or her parents etc. to remind the dangerous behavior. A person skilled in the art will understand that the security processing operation includes but is not limited to the above-mentioned operations; it can also be other operations, such as locking the screen automatically and powering off etc.

In the above-mentioned technical solution, preferably, before the step 202, the method further comprises: detecting and recording the real-time speed of the terminal; calculating the moving speed according to the recorded real-time speed.

In the technical solution, in order to ensure the accuracy of the judgement of the speed of the terminal, the speed can be collected in real time, and then calculate the average speed of a period of time (for example, two minutes) of the terminal and use the average speed as the moving speed of the terminal, thereby avoiding an erroneous judgement and an erroneous operation of the terminal.

In the above-mentioned technical solution, preferably, the method further comprises: setting the first moving speed, the second moving speed, and/or the security processing operation according to a received setting instruction.

In the technical solution, the user or the manufacture can set a judgement condition (i.e. the threshold of moving speed) of the walking state freely according to the requirements, and set the operation used to remind the user freely if it is determined that the user plays with a mobile phone while walking, thereby satisfying different requirements of different users and improving the user experience.

According to an embodiment of the present invention, it is provided a program product stored in a non-volatile machine-readable medium for terminal management. The program product includes machine executable instructions, when executed by a computer system, causing the system to execute the following steps: acquiring the moving speed of the terminal; judging whether a user of the terminal gazes upon a screen of the terminal when the moving speed is greater than or equal to a first moving speed and is less than or equal to a second moving speed; performing a corresponding security processing operation when the judgement result is yes.

According to an embodiment of the present invention, it is also provided a non-volatile machine-readable medium storing a program product for terminal management. The program product includes machine executable instructions, when executed by a computer system, causing the system to execute the following steps: acquiring the moving speed of the terminal; judging whether a user of the terminal gazes upon a screen of the terminal when the moving speed is greater than or equal to a first moving speed and is less than or equal to a second moving speed; performing a corresponding security processing operation when the judgement result is yes.

According to an embodiment of the present invention, it is also provided a machine-readable program, configured to cause the machine to execute any of the terminal management methods described in the above-mentioned technical solutions.

According to an embodiment of the present invention, it is also provided a storage medium storing a machine-readable program. The machine-readable program is configured to cause the machine to execute any of the terminal management methods described in the above-mentioned technical solutions.

By means of the above-mentioned technical solutions, corresponding reminding and restricting can be performed if a user plays with a mobile phone while walking so as to guarantee the personal security of the user.

### BRIEF DESCRIPTION OF THE DRAWINGS

Fig.1 is a block diagram illustrating a terminal according to an embodiment of the present invention;
Fig.2 is a flowchart illustrating a terminal management method according to an embodiment of the present invention;
Fig.3 is a specific flowchart illustrating the terminal management method according to an embodiment of the present invention;
Fig.4 is a schematic diagram illustrating the interface of the terminal according to an embodiment of the present invention.

### DETAILED DESCRIPTION OF ILLUSTRATED EMBODIMENTS

To understand the above-mentioned purposes, features, and advantages of the present disclosure more clearly, the present invention will be further described in detail below in combination with the accompanying drawings and the specific implementations. It should be noted that, the embodiments of the present application and the features in the embodiments may be combined with one another without conflicts.

Many specific details will be described below for sufficiently understanding the present disclosure. However, the present invention can also be implemented by adopting other manners different from those described herein. Accordingly, the protection scope of the present invention is not limited by the specific embodiments disclosed below.

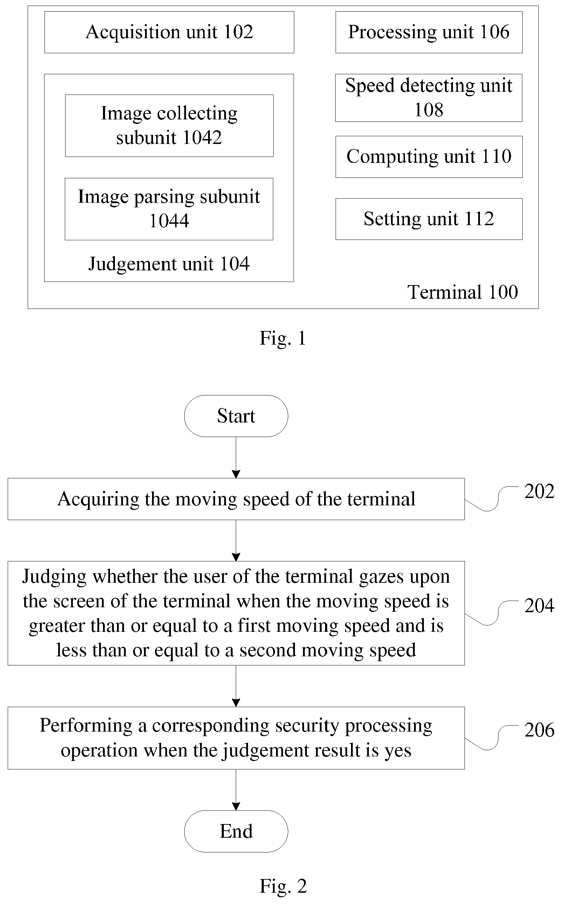

Fig.1 is a block diagram illustrating a terminal according to an embodiment of the present invention.

As shown in Fig.1, a terminal 100 according to an embodiment of the present invention comprises: an acquisition unit 102, configured to acquire the moving speed of the terminal a judgement unit 104, configured to judge whether a user of the terminal gazes upon a screen of the terminal when the moving speed is greater than or equal to a first moving speed and is less than or equal to a second moving speed; a processing unit 106, configured to perform a corresponding security processing operation when the judgement result of the judgement unit 104 is yes.

In the technical solution, it is judged whether the user of the terminal is in a walking state according to the moving speed of the terminal. The user will be in the walking state if the moving speed of the terminal is in a walking speed range, here judge whether the user is playing with a mobile phone and perform the corresponding security processing operation if it is judged that the user is playing with a mobile phone, thus to remind or restrict the dangerous behavior of playing with a mobile phone while walking and guarantee the personal security of the user.

In the above-mentioned technical solution, preferably, the judgement unit 104 further comprises: an image collecting subunit 1042, configured to collect a current image and acquire the image information of the current image; an image parsing subunit 1044, configured to parse the image information and judge whether eye characteristics information is included in the image information according to the parse result, and judge whether the user of the terminal gazes upon the screen of the terminal according to the eye characteristics information if the eye characteristics information is included in the image information.

In the technical solution, eye-tracing technology can be used to achieve the judgment of whether the user gazes upon the screen of the terminal, that is, acquire the current image through a camera; the user may not gaze upon the screen of the terminal currently if there is no eye characteristic image included in the acquired current image; otherwise, determine the gaze direction and position etc. of the user according to the eye characteristic image if the eye characteristic image is included in the acquired current image, thereby judging whether the user gazes upon the screen of the terminal.

In the above-mentioned technical solution, preferably, the processing unit 106 is further configured to: start to count the gaze duration upon the screen of the user of the terminal if the judgement result of the judgement unit is yes, and perform the corresponding security processing operation if the duration exceeds a preset duration.

In the technical solution, it is determined that the user playing with a mobile phone while walking after confirming that the user has gazed upon the screen of the mobile phone for a while during walking, and then the security processing operation will be performed, thus to ensure the accuracy of the judgement result and avoid inconvenience caused by an erroneous judgement.

In the above-mentioned technical solution, preferably, the security processing operation comprises: initiating a security reminder, closing the data service of the terminal, and/or sending a preset massage to other preset terminals.

In the technical solution, the security processing operation can be initiating a security reminder, such as sending a reminder message to the user to remind him should not play with a mobile phone while walking for his personal security. The security processing operation can also be closing the data service of the terminal automatically; in this way, the user will be forced to stop gazing upon a mobile phone. If the user who gazes upon a mobile phone while walking is a child, the security processing operation can also be sending a preset massage to other preset terminals, that is, sending a message to his or her parents etc. to remind the dangerous behavior. A person skilled in the art will understand that the security processing operation includes but is not limited to the above-mentioned operations; it can also be other operations, such as locking the screen automatically and powering off etc.

In the above-mentioned technical solution, preferably, the terminal 100 further comprises: a speed detecting unit 108, configured to detect and record the real-time speed of the terminal; a computing unit 110, configured to calculate the moving speed according to the recorded real-time speed.

In the technical solution, in order to ensure the accuracy of the judgement of the speed of the terminal, the speed can be collected in real time, and then calculate the average speed of a period of time (for example, two minutes) of the terminal and use the average speed as the moving speed of the terminal, thereby avoiding an erroneous judgement and an erroneous operation of the terminal.

In the above-mentioned technical solution, preferably, the terminal 100 further comprises: a setting unit 112, configured to set the first moving speed, the second moving speed, and/or the security processing operation according to a received setting instruction.

In the technical solution, the user or the manufacture can set a judgement condition (i.e. the threshold of moving speed) of the walking state freely according to the requirements, and set the operation used to remind the user freely if it is determined that the user plays with a mobile phone while walking, thereby satisfying different requirements of different users and improving the user experience.

Fig.2 is a flowchart illustrating a terminal management method according to an embodiment of the present invention.

As shown in Fig.2, the terminal management method according to an embodiment of the present invention comprises: step 202, acquiring the moving speed of the terminal; step 204, judging whether a user of the terminal gazes upon a screen of the terminal when the moving speed is greater than or equal to a first moving speed and is less than or equal to a second moving speed; step 206, performing a corresponding security processing operation when the judgement result is yes.

In the technical solution, it is judged whether the user of the terminal is in a walking state according to the moving speed of the terminal. The user will be in the walking state if the moving speed of the terminal is in a walking speed range, here judge whether the user is playing with a mobile phone, and perform the corresponding security processing operation if it is judged that the user is playing with a mobile phone, thus to remind or restrict the dangerous behavior of playing with a mobile phone while walking and guarantee the personal security of the user.

In the above-mentioned technical solution, preferably, the step 204 comprises: collecting a current image and acquiring the image information of the current image; analyzing the image information and judging whether eye characteristics information is included in the image information according to the parse result, and judging whether the user of the terminal gazes upon the screen of the terminal according to the eye characteristics information if the eye characteristics information is included in the image information,

In the technical solution, eye-tracing technology can be used to achieve the judgment of whether the user gazes upon the screen of the terminal, that is, acquire the current image through a camera; the user may not gaze upon the screen of the terminal currently if there is no eye characteristic image included in the acquired current image; otherwise, determine the gaze direction and position etc. of the user according to the eye characteristic image if the eye characteristic image is included in the acquired current image, thereby judging whether the user gazes upon the screen of the terminal.

In the above-mentioned technical solution, preferably, the step 206 further comprises: starting to count the gaze duration upon the screen of the user of the terminal if the judgement result of the judgement unit is yes, and performing the corresponding security processing operation if the duration exceeds a preset duration.

In the technical solution, it is determined that the user plays with a mobile phone while walking after confirming that the user has gazed upon the screen of the mobile phone for a while during walking, and then the security processing operation will be performed, thus to ensure the accuracy of the judgement result and avoid inconvenience caused by an erroneous judgement.

In the above-mentioned technical solution, preferably, the security processing operation comprises: initiating a security reminder, closing the data service of the terminal, and/or sending a preset massage to other preset terminals.

In the technical solution, the security processing operation can be initiating a security reminder, such as sending a reminder message to the user to remind him should not play with a mobile phone while walking for his personal security. The security processing operation can also be closing the data service of the terminal automatically; in this way, the user will be forced to stop gazing upon a mobile phone. If the user who gazes upon a mobile phone while walking is a child, the security processing operation can also be sending a preset massage to other preset terminals, that is, sending a message to his or her parents etc. to remind the dangerous behavior. A person skilled in the art will understand that the security processing operation includes but is not limited to the above-mentioned operations; it can also be other operations, such as locking the screen automatically and powering off etc.

In the above-mentioned technical solution, preferably, before the step 202, the method further comprises: detecting and recording the real-time speed of the terminal; calculating the moving speed according to the recorded real-time speed.

In the technical solution, in order to ensure the accuracy of the judgement of the speed of the terminal, the speed can be collected in real time, and then calculate the average speed of a period of time (for example, two minutes) of the terminal and use the average speed as the moving speed of the terminal, thereby avoiding an erroneous judgement and an erroneous operation of the terminal.

In the above-mentioned technical solution, preferably, the method further comprises: setting the first moving speed, the second moving speed, and/or the security processing operation according to a received setting instruction.

In the technical solution, the user or the manufacture can set a judgement condition (i.e. the threshold of moving speed) of the walking state freely according to the requirements, and set the operation used to remind the user freely if it is determined that the user plays with a mobile phone while walking, thereby satisfying different requirements of different users and improving the user experience.

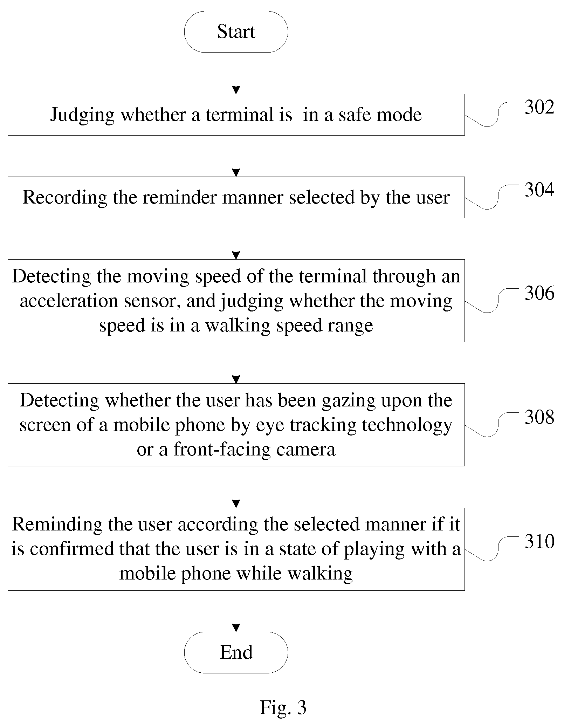

Fig.3 is a specific flowchart illustrating a terminal management method according to an embodiment of the present invention.

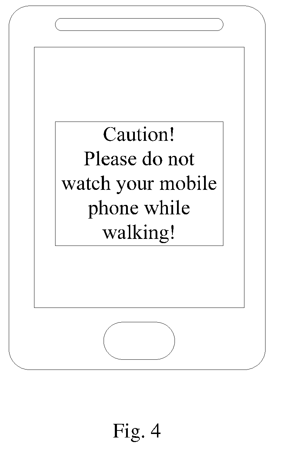

As shown in Fig.3, the specific process of the terminal management method according to an embodiment of the present invention comprises:
Step 302, setting a safe mode (or walking mode) and a common mode for the user to select, and if it is determined that the user is in the safe mode (or walking mode), proceed to step 304.
Step 304, selecting a reminder manner by the user if the safe mode has been selected. The reminder manner includes but is not limited to the following: 1. displaying a reminder message, as shown in Fig.4, to remind the user should not play with a mobile phone while walking for the personal security; 2. disabling a data network automatically: if it is detected that the user is in a state of playing with a mobile phone while walking, disabling the data network automatically to force the user to stop watching (or playing with) the mobile phone, and opening the data network automatically if the user is in another state; 3. sending a message to a fixed number automatically to remind a relevant person. For instance, if the user of the mobile phone is a child, a message will be sent to the mobile phone of his or her parents to remind the dangerous behavior.
Step 306, detecting whether the user is in a walking state through an acceleration sensor by the terminal. The walking state can be determined by the moving speed of the user, normally the walking speed of the user will be in a range, and the moving speed of the user can be detected to determine whether the user is in a walking state.
Step 308, judging whether the user is watching the mobile phone through eye tracing technology when it is determined that the user is in a walking state; when the judgement result is yes, proceed to Step 310. The duration that the user watches the mobile phone can also be recorded, and it is determined that the user plays with a mobile phone while walking after determining that the user has gazed upon the screen of the mobile phone for a while, and then perform the security processing operation, such that the accuracy of the judgement result can be ensured and inconvenience caused by erroneous judgement can be avoided.
Step 310, reminding the user according to the manner selected in Step 304 if it is confirmed that the user is in a state of playing with a mobile phone while walking. A person skilled in the art will understand that the security processing operation includes but is not limited to the above-mentioned operations; it can also be other operations, such as locking the screen automatically and powering off etc.

The technical solution of the present invention has been illustrated in combination with the accompanying drawings. By means of the technical solution of the present invention, the user will be reminded or restricted automatically if it is detected that the user plays with a mobile phone while walking, such that the risk caused by playing with a mobile phone while walking can be reduced and the personal security of the user can be ensured.

According to an embodiment of the present invention, it is also provided a program product stored in a non-volatile machine-readable medium for terminal management. The program product includes machine executable instructions, when executed by a computer system, causing the system to execute the following steps: acquiring the moving speed of the terminal; judging whether a user of the terminal gazes upon a screen of the terminal when the moving speed is greater than or equal to a first moving speed and is less than or equal to a second moving speed; performing a corresponding security processing operation when the judgement result is yes.

According to an embodiment of the present invention, it is also provided a non-volatile machine-readable medium storing a program product for terminal management. The program product includes machine executable instructions, when executed by a computer system, causing the system to execute the following steps: acquiring the moving speed of the terminal; judging whether a user of the terminal gazes upon a screen of the terminal when the moving speed is greater than or equal to a first moving speed and is less than or equal to a second moving speed; performing a corresponding security processing operation when the judgement result is yes.

According to an embodiment of the present invention, it also provides a machine-readable program. The program is configured to cause the machine to execute any of the terminal management methods described in the above-mentioned technical solutions.

According to an embodiment of the present invention, it is also provided a storage medium storing a machine-readable program, wherein, the machine-readable program is configured to cause the machine to execute any of the terminal management methods described in the above-mentioned technical solutions.

The foregoing descriptions are merely preferred embodiments of the present disclosure, rather than limiting the present disclosure. Various modifications and alterations can be made to the present disclosure for those skilled in the art. Any modification, equivalent substitution, improvement or the like made within the spirit and principle of the present disclosure shall fall into the protection scope of the present disclosure.

## Claims

1. A terminal, comprising:
an acquisition unit configured to acquire the moving speed of the terminal;
a judgement unit configured to judge whether a user of the terminal gazes upon a screen of the terminal when the moving speed is greater than or equal to a first moving speed and is less than or equal to a second moving speed; and
a processing unit configured to perform a corresponding security processing operation when the judgement result of the judgement unit is yes.

2. The terminal of claim 1, wherein the judgement unit further comprises:
an image collecting subunit configured to collect a current image and acquire the image information of the current image; and
an image parsing subunit configured to parse the image information and judge whether eye characteristics information is included in the image information according to the parse result, and judge whether the user of the terminal gazes upon the screen of the terminal according to the eye characteristics information if the eye characteristics information is included in the image information.

3. The terminal of claim 1, wherein the processing unit is further configured to start to count the gaze duration upon the screen of the user of the terminal if the judgement result of the judgement unit is yes and perform the corresponding security processing operation if the duration exceeds a preset duration.

4. The terminal of claim 1, wherein the security processing operation comprises:
initiating a security reminder, closing the data service of the terminal, and/or sending a preset massage to other preset terminals.

5. The terminal of claim 1 further comprises:
a speed detecting unit configured to detect and record the real-time speed of the terminal; and
a computing unit configured to calculate the moving speed according to the recorded real-time speed.

6. The terminal of any of claims 1-5 further comprises:
a setting unit configured to set the first moving speed, the second moving speed, and/or the security processing operation according to a received setting instruction.

7. A terminal management method, comprising:
step 202, acquiring the moving speed of the terminal;
step 204, judging whether a user of the terminal gazes upon a screen of the terminal when the moving speed is greater than or equal to a first moving speed and is less than or equal to a second moving speed; and
step 206, performing a corresponding security processing operation when the judgement result is yes.

8. The terminal management method of claim 7, wherein the step 204 comprises:
collecting a current image and acquiring the image information of the current image; and
analyzing the image information and judging whether eye characteristics information is included in the image information according to the parse result, and judging whether the user of the terminal gazes upon the screen of the terminal according to the eye characteristics information if the eye characteristics information is included in the image information.

9. The terminal management method of claim 7, wherein the step 206 further comprises:
starting to count the gaze duration upon the screen of the user of the terminal if the judgement result of the judgement unit is yes and performing the corresponding security processing operation if the duration exceeds a preset duration.

10. The terminal management method of claim 7, wherein the security processing operation comprises:
initiating a security reminder, closing the data service of the terminal, and/or sending a preset massage to other preset terminals.

11. The terminal management method of claim 7, wherein before the step 202, further comprises:
detecting and recording the real-time speed of the terminal; and
calculating the moving speed according to the recorded real-time speed.

12. The terminal management method of any of claims 7-11 further comprises:
setting the first moving speed, the second moving speed, and/or the security processing operation according to a received setting instruction.
